# EUROPÄISCHE PATENTSCHRIFT

(11) **EP 0 388 398 B1**
(45) Veröffentlichungstag und Bekanntmachung des Hinweises auf die Patenterteilung: **28.07.1993**
(21) Anmeldenummer: 90890052.5
(22) Anmeldetag: 01.03.1990
(51) Int. Cl.: B65H 29/64, B29C 63/00

(54) **Vorrichtung zum Abnehmen eines flächigen Werkstückes von einer anklebenden Unterfolie**
Device for removing a flat workpiece from an adhesive film
Dispositif pour retirer une pièce plate d'un film adhésif

(30) Priorität: 17.03.1989 AT 614/89
(43) Veröffentlichungstag der Anmeldung: 19.09.1990
(73) Patentinhaber: Blaimschein, Gottfried, Dipl.-Ing., A-4407 Steyr (AT)
(72) Erfinder: Blaimschein, Gottfried, Dipl.-Ing., A-4407 Steyr (AT)
(74) Vertreter: Hübscher, Heiner, Dipl.-Ing.

(56) Entgegenhaltungen:
- US-A- 4 556 362
- US-A- 4 775 438

## Beschreibung

Die Erfindung bezieht sich auf eine Vorrichtung zum Abnehmen eines flächigen Werkstückes von einer anklebenden Unterfolie, insbesondere zum Trennen eines aus einem folienversehenen Ausgangsmaterial ausgeschnittenen Zuschnittes von Folie und Abfall, mit einem das Ausgangsmaterial aufnehmenden Abnahmetisch und einem das abgenommene Werkstück übernehmenden Ablagetisch od. dgl., welche Tische vorzugsweise unterdruckbeaufschlagbare Arbeitsflächen aufweisen, sowie mit einem heb- und senkbaren, zwischen Abnahme- und Ablagetisch hin- und herverfahrbaren Werkzeugträger für ein Abnahmewerkzeug.

Um solche Werkstücke von ihrer Unterfolie maschinell ablösen zu können, was vor allem beim Abnehmen von aus folienbedeckten Prepregs od. dgl. Ausgangsmaterial ausgeschnittenen Zuschnitten unter gleichzeitiger Trennung der Zuschnitte vom Abfall von Bedeutung ist, werden bisher als Abnahmewerkzeuge Vakuumsauger oder Nadelgreifer eingesetzt, doch befriedigen diese Abnahmevorrichtungen nicht, da die Vakuum sauger und Nadelgreifer einen beträchtlichen Bau- und Konstruktionsaufwand mit sich bringen und außerdem durch den punktuellen Einsatz dieser bekannten Abnahmewerkzeuge Funktionsstörungen und vor allem auch Beschädigungen der Werkstücke beim Abnehmen zu befürchten sind (siehe US-A-4 775 438 und US-A-4 556 362).

Der Erfindung liegt daher die Aufgabe zugrunde, diese Mängel zu beseitigen und eine Vorrichtung der eingangs geschilderten Art zu schaffen, die sich bei verhältnismäßig geringem Bauaufwand durch ihre rationelle, funktionssichere und werkstückschonende Arbeitsweise auszeichnet.

Die Erfindung löst diese Aufgabe dadurch, daß eine in ihrer Form an das abzunehmende Werkstück angepaßte, mit einer Haftfolie überspannte Andrückplatte od.dgl. das Abnahmewerkzeug bildet, welche bandförmige, vorzugsweise am Werkstück stärker als die Unterfolie anklebende Haftfolie, über zwei beiderseits der Andrückplatte angeordnete und dieser gegenüber zurückversetzte Umlenkrollen geführt, längsbewegbar zwischen zwei Wickeltrommeln verläuft, wobei der Werkzeugträger zur Werkstückabnahme mit seiner Andrückplatte auf das am Abnahmetisch liegende Werkstück aufsetzbar ist und beim Anheben das an der Haftfolie angeklebte Werkstück von der auf der Arbeitsfläche des Abnahmetisches vorzugsweise durch Unterdruckbeaufschlagung zurückgehaltenen Unterfolie u. dgl. abnimmt und zur Werkstückablage nach einem Aufsetzen der Andrückplatte mit dem an der Haftfolie klebenden Werkstück auf dem Ablagetisch od. dgl. parallel zur Arbeitsfläche des Ablagetisches in Folienlängsrichtung unter gegengleicher Längsbewegung der Haftfolie verschiebbar ist und die Haftfolie dadurch vom auf der Arbeitsfläche vorzugsweise durch Unterdruckbeaufschlagung niedergehaltenen Werkstück abzieht. Auf Grund ihrer Haftfähigkeit läßt sich die Haftfolie durch entsprechendes Aufdrücken der Andrückplatte am Werkstück ankleben und das Werkstück bei gegenüber der Unterfolie stärkerer Haftung durch einfaches Anheben des Werkzeugträgers von der Unterfolie abnehmen, die auf geeignete Weise an der Arbeitsfläche des Abnahmetisches, beispielsweise durch eine Haftunterlage od. dgl., vorzugsweise aber durch eine Unterdruckbeaufschlagung, zurückgehalten wird. Das an der Haftfolie klebende Werkstück wird alleine abgenommen und die Unterfolienstücke und/oder der Abfall verbleiben am Abnahmetisch. Um nun das Werkstück wieder von der Haftfolie ablösen zu können, wird es auf den Ablagetisch oder einem Werkzeug zur Weiterverarbeitung abgesetzt und durch eine entsprechende Haftunterlage, vorzugsweise wieder durch eine Unterdruckbeaufschlagung, an der Arbeitsfläche niedergehalten, während der Werkzeugträger relativ zum Ablagetisch od. dgl. und damit zum Werkstück in Folienlängsrichtung verschoben wird. Dabei bewegt sich die Folie gegengleich und wird entsprechend von der einen auf die andere Wickeltrommel umgewickelt, wobei durch die in Bewegungsrichtung hintere Umlenkrolle die Folie vom Werkstück abgezogen und damit gelöst wird. Durch diese über die Umlenkrolle geführte Abziehbewegung kann auch eine stark haftende Haftfolie problemlos vom Werkstück getrennt werden und das folienfreie Werkstück bleibt am Ablagetisch oder Werkzeug zurück. Die Werkstücke werden flächig von der Haftfolie aufgenommen und es kommt zu keinerlei Beschädigungsgefahr für das Werkstück. Die Andrückplatte, die dafür sorgt, daß die Haftfolie nur im Bereich des abzunehmenden Werkstückes am Ausgangsmaterial aufsetzt, ist der Werkstückform entsprechend anzupassen und kann selbstverständlich ausgetauscht und auf geänderte Werkstückformen abgestimmt werden.

Ist die Andrückplatte dem Werkstück gegenüber zu klein oder bildet das Werkstück über die Andrückplatte hinausragende Lappen u. dgl., kann es beim Abheben des Werkstückes in diesen Randbereichen zu Störungen kommen und, um auch in solchen Fällen ein einwandfreies Abnehmen der Werkstücke zu gewährleisten, läßt sich erfindungsgemäß der Werkstückträger im Randbereich der Andrückplatte mit an sich bekannten Zusatz-Abnahmewerkzeugen, insbesondere Nadelgreifern oder Vakuumsaugern, ausrüsten. Diese Zusatz-Abnahmewerkzeuge werden gezielt in kritischen Bereichen eingesetzt und unterstützen so bedarfsweise das Abheben mittels der Haftfolie, wodurch ein störungsfreies Abnehmen auch außergewöhnlich und kompliziert geformter Werkstücke sichergestellt ist.

Nach einer weiteren Ausgestaltung der Erfindung kann die Andrückplatte auch mit einer Heizeinrichtung versehen sein, um die meist stark temperaturabhängige Haftfähigkeit zwischen Haftfolie und Werkstück zu beeinflussen. Diese Heizeinrichtung ist einfach durch Heizschlangen, -drähte u.dgl. zu installieren und erlaubt es vor allem bei Prepregs, durch Erwärmung des Werkstückes dessen Klebrigkeit beträchtlich zu erhöhen und damit das Abnehmen des Werkstückes zu erleichtern.

Eine geschickte Möglichkeit, Werkstücke auch unter schwierigsten Bedingungen von der Unterfolie zu befreien, liegt erfindungsgemäß darin, daß dem Abnahmetisch, der vorzugsweise einen die Arbeitsfläche bildenden Bandförderer aufweist, ein aus dem Endbereich der Arbeitsfläche abwärts führender Abzugsförderer od. dgl. mit einer Klemmeinrichtung zum Erfassen der Unterfolie nachgeordnet und der zur Werkstückabnahme auf den Arbeitstisch aufgesetzte Werkzeugträger parallel zur Arbeitsfläche zum Arbeitsflächenende hin und darüber hinaus im Maße der Fördergeschwindigkeit von Abzugsförderer und gegebenenfalls Bandförderer bewegbar ist. Durch das Zusammenwirken von Abzugsförderer und Werkzeugträgerbewegung kann auf Grund des Folienabziehens vom Werkstück auch dann ein Werkstück von der Unterfolie befreit werden, wenn die Unterfolie etwa so stark am Werkstück haftet wie dieses selbst gehalten wird, da das fortschreitende Abziehen wesentlich leichter ist als das großflächige Abheben. Dadurch lassen sich nun nicht nur Werkstücke mittels weniger haftfähiger Haftfolien abnehmen, sondern sogar auch mehrere Werkstücke oder Zuschnitte vor einer Weiterbehandlung aufeinanderschichten und dabei jeweils die einzelnen Werkstücke von den Unterfolien abnehmen. Da nur das oberste der aufeinanderzulegenden Werkstücke an der Haftfolie anklebbar ist, kann meist die Unterfolie auch nur vom ersten Werkstück durch einfaches Abheben des an der Haftfolie angeklebten Werkstückes getrennt werden. Wird nun ein solches Werkstück nach dem Abnehmen von der Unterfolie auf ein weiteres Werkstück aufgelegt, dann haften diese beiden Werkstücke nur etwa mit gleicher Stärke aneinander wie die Unterfolie am Werkstück selbst. Um daher die Unterfolie vom zweiten Werkstück abnehmen zu können, wird der Rand dieser Unterfolie in die Klemmeinrichtung des Abzugsförderers eingespannt und der Werkstückträger samt den beiden aufeinanderliegenden Werkstücken der Arbeitsfläche des Abnahmetisches entlang verfahren, während gleichzeitig der Abzugsförderer die Folie über eine Endkante oder, bei Vorhandensein eines Bandförderers als Arbeitsfläche, über die Umlenkrolle des Förderbandes nach unten abzieht, so daß es durch dieses Abziehen zum gewünschten Lösen der Unterfolie ohne Trennen der aufeinanderliegenden Werkstücke kommt. Durch Wiederholen dieses Vorganges können beliebig viele Werkstücke aufeinandergelegt werden, wobei jeweils vom untersten durch das Zusammenwirken des längsverschiebbaren Werkzeugträgers und des abwärtsziehenden Abzugsförderers die Unterfolie entfernt wird. Die Längsbewegung der Werkstücke entlang des Abnahmetisches wird durch einen Bandförderer erleichtert, es wäre aber auch durchaus möglich, den Werkstückstapel mittels des Werkzeugträgers gleitend über eine glatte, feste Arbeitsfläche zu schieben.

Das Übereinanderlegen mehrerer Werkstücke und Zuschnitte ist meist dann erforderlich, wenn streifenförmige Werkstücke od. dgl. vorhanden sind, um gegebenenfalls durch unterschiedliche Streifenbreiten verschiedene Querschnittsformen aufbauen zu können. Ist erfindungsgemäß der Abzugsförderer aus wenigstens zwei parallelgeführten Bandförderern zusammengesetzt, von denen jeder eine eigene Klemme aufweist, können in entsprechende Streifen geschnittene Ausgangsmaterialien auf die feste Arbeitsfläche des Abnahmetisches aufgelegt und an Ort und Stelle Streifen für Streifen aufeinandergeschichtet werden, wobei jeweils einem Materialstreifen zum Folienabziehen einer der einzelnen Bandförderer zugeordnet ist.

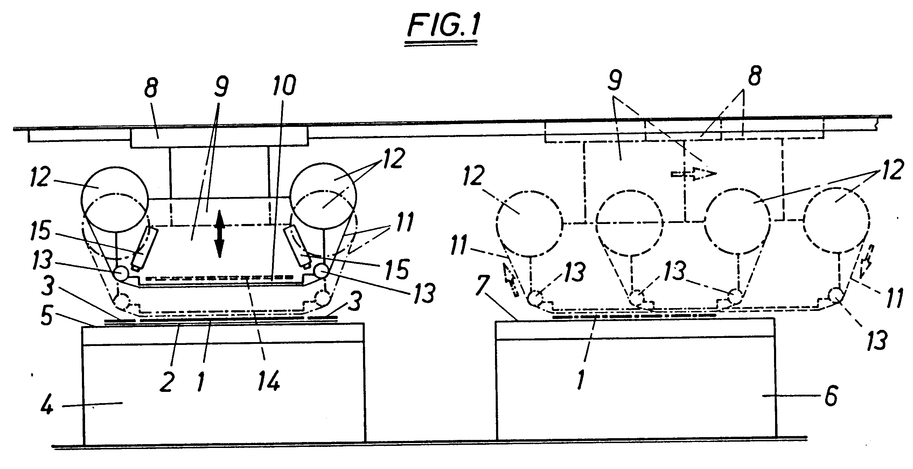

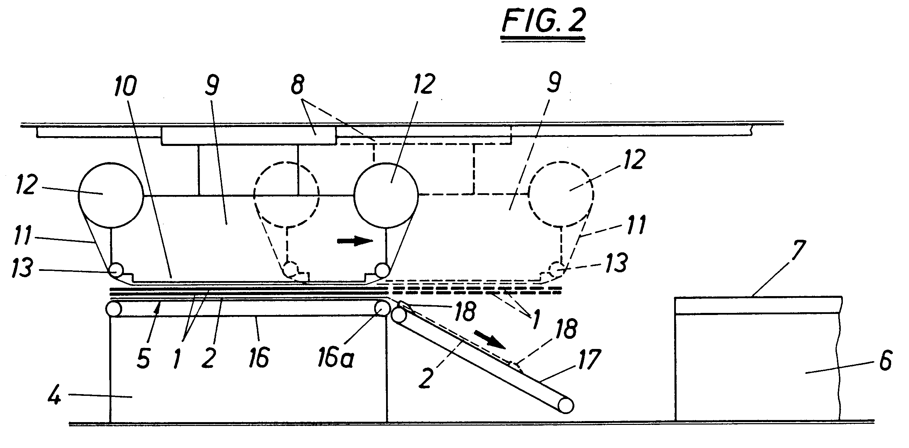

In der Zeichnung ist der Erfindungsgegenstand beispielsweise näher veranschaulicht, und zwar zeigen
- Fig. 1 und 2: zwei Ausführungsbeispiele einer erfndungsgemäßen Vorrichtung jeweils im Anlagenschema.

Um flächige Werkstücke 1, beispielsweise Zuschnitte, von einer anklebenden Unterfolie 2 und gegebenenfalls dem verbleibenden Abfall 3 abnehmen zu können, gibt es einen Abnahmetisch 4 mit einer unterdruckbeaufschlagbaren Arbeitsfläche 5 zur Aufnahme des Ausgangsmaterials und einen Ablage- oder Werkzeugtisch 6 ebenfalls mit einer unterdruckbeaufschlagbaren Arbeitsfläche 7 zur Übernahme der abgenommenen Werkstücke 1. Außerdem ist ein auf einem nur angedeuteten Schlitten 8 aufgebauter Werkzeugträger 9 vorgesehen, der als Abnahmewerkzeug eine nach unten vorragende, in ihrer Form an das abzunehmende Werkstück 1 angepaßte Andrückplatte 10 und eine die Andrückplatte 10 überspannende Haftfolie 11 aufnimmt. Diese Haftfolie 11 haftet stärker am Werkstück 1 an als die Unterfolie und läuft längsbeweglich zwischen zwei Wickelrollen 12, wobei beidseits der Andrückplatte 10 angeordnete, dieser gegenüber zurückversetzte Umlenkrollen 13 die Haftfolie 11 über die Andrückplatte 10 führen.

Zum Abnehmen eines Werkstückes 1 wird der Werkzeugträger 9 in Abnahmeposition über den Abnahmetisch 4 gefahren und mit seiner Andrückplatte 10 auf das am Abnahmetisch 4 liegende Werkstück 1 abgesenkt. Das Werkstock 1 klebt im Bereich der Andrückplatte 10 an der Haftfolie 11 an und auf Grund der starken Haftkraft zwischen Haftfolie 11 und Werkstück 1 wird das Werkstück 1 beim Anheben des Werkzeugträgers 9 von der an der Arbeitsfläche 5 durch Unterdruckbeaufschlagung zurückgehaltenen Unterfolie 2 und dem verbleibenden Abfall 3 abgenommen.

Zum Ablegen des an der Haftfolie 11 klebenden Werkstückes 1 fährt nun der Werkzeugträger 9 zum Ablegetisch 6 und legt das Werkstück 1 durch Absenken der Andrückplatte 10 auf die Arbeitsfläche 7 des Ablegetisches 6 auf. Anschließend wird der Werkzeugträger 9 in Richtung der Haftfolie 11 verschoben, wobei die Haftfolie 11 gegengleich abläuft, so daß durch ein entsprechend weites Verschieben des Werkzeugträgers 9 die über die hintere Umlenkrolle 13 umgelenkte Haftfolie 11 vom Werkstück 1 gleichmäßig vom hinteren Ende her abgezogen wird und es zu einer einwandfreien Trennung zwischen Haftfolie und durch Unterdruckbeaufschlagung auf der Arbeitsfläche 7 niedergehaltenem Werkstück 1 kommt. Sobald der Werkzeugträger einen etwa der Werkstücklänge entsprechenden Weg verschoben und dadurch die Haftfolie vom gesamten Werkstück 1 abgezogen ist, kann der Werkzeugträger 9 wieder angehoben und zum Aufnehmen eines neuen Werkstückes zurückgefahren werden.

Zur Beeinflussung der Haftfähigkeit zwischen Haftfolie 11 und Werkstück 1 kann dabei in der Andrückplatte 10 eine Heizeinrichtung 14 installiert sein und zur Unterstützung der Haftfolie 11 beim Abnehmen eines von der Andrückplattenform zu stark abweichenden Werkstückes ist es auch möglich, am Werkzeugträger 9 Zusatz-Abnahmewerkzeuge, wie Nadelgreifer 15, vorzusehen, die bedarfsweise angesteuert werden und zusammen mit der Haftfolie das Werkstück abnehmen.

Gemäß dem in Fig. 2 angedeuteten Ausführungsbeispiel ist dem Abnahmetisch 4, der einen Bandförderer 16 als Arbeitsfläche aufweist, ein Abzugsförderer 17 nachgeordnet, der mit einer Klemmeinrichtung 18 zum Erfassen einer Unterfolie 2 ausgestattet ist und vom Endbereich des Bandförderers 16 abwärts führt. Der Werkzeugträger 9 kann hier im Maße der Fördergeschwindigkeit von Bandförderer 16 und Abzugsförderer 17 in Förderrichtung horizontal über den Bandförderer 16 hinaus bewegt werden, so daß bei dieser Bewegung von einem am Werkzeugträger 9 haftenden Werkstück 1 durch den Abzugsförderer 17 die in der Klemmeinrichtung 18 eingespannte Unterfolie über die Endumlenkrolle 16a des Bandförderers 16 abgezogen werden kann. Dadurch ist es nicht nur möglich, die Unterfolie auch dann abzunehmen, wenn der Haftungsüberschuß der Haftfolie allein unzureichend ist, sondern sogar mehrere Werkstücke 1 übereinanderzulegen und jeweils vom unteren Werkstück die Unterfolie abzuziehen, wobei das an der Haftfolie 11 klebende Werkstückpaket nach dem entsprechenden Übereinanderschichten der Werkstücke in üblicher Weise am Ablage- oder Werkzeugtisch 6 abgesetzt und die Haftfolie dann vom obersten Werkstück durch geeignetes Horizontalverschieben des Werkzeugträgers 9 und gleichzeitiges Längsbewegen der Folie abgezogen werden kann.

## Patentansprüche

1. Vorrichtung zum Abnehmen eines flächigen Werkstückes (1) von einer anklebenden Unterfolie (2), insbesondere zum Trennen eines aus einem folienversehenen Ausgangsmaterial ausgeschnittenen Zuschnittes von Folie und Abfall, mit einem das Ausgangsmaterial aufnehmenden Abnahmetisch (4) und einem das abgenommene Werkstück (1) übernehmenden Ablagetisch (6) od. dgl., welche Tische vorzugsweise unterdruckbeaufschlagbare Arbeitsflächen aufweisen, sowie mit einem heb- und senkbaren, zwischen Abnahme- und Ablagetisch (4, 6) hin- und herverfahrbaren Werkzeugträger (9) für ein Abnahmewerkzeug, dadurch gekennzeichnet, daß der Werkzeugträger (9) als Abnahmewerkzeug in an sich bekannter Weise mit einer in ihrer Form an das abzunehmende Werkstück (1) angepaßten, haftfolienüberspannten Andrückplatte (10) od. dgl. bestückt ist, welche bandförmige, über zwei beiderseits der Andrückplatte (10) angeordnete und dieser gegenüber zurückversetzte Umlenkrollen (13) geführte Haftfolie (11) längsbewegbar zwischen zwei Wickeltrommeln (12) verläuft und vorzugsweise eine gegenüber dem Werkstück (1) stärkere Klebefähigkeit besitzt als die Unterfolie (2), und daß der Werkzeugträger (9) nach dem Aufsetzen auf das am Abnahmetisch (4) liegende Werkstück (1) beim Anheben das an der Haftfolie (11) angeklebte Werkstück (1) von der auf der Arbeitsfläche (5) des Abnahmetisches (4) vorzugsweise durch Unterdruckbeaufschlagung zurückgehaltenen Unterfolie (2) u.dgl. abnimmt und dann zur Werkstückablage nach einem Aufsetzen der Andrückplatte (10) mit dem an der Haftfolie (11) klebenden Werkstück (1) auf dem Ablagetisch (6) od. dgl. parallel zur Arbeitsfläche (7) des Ablagetisches (6) in Folienlängsrichtung unter gegengleicher Längsbewegung der Haftfolie (11) verschiebbar ist und die Haftfolie (11) dadurch vom auf der Arbeitsfläche (7) vorzugsweise durch Unterdruckbeaufschlagung niedergehaltenen Werkstück (1) abzieht.

2. Vorrichtung nach Anspruch 1, dadurch gekennzeichnet, daß der Werkzeugträger (9) im Randbereich der Andrückplatte (10) mit an sich bekannten Zusatz-Abnahmewerkzeugen, insbesondere Nadelgreifern (15) oder Vakuumsaugern, ausrüstbar ist.

3. Vorrichtung nach Anspruch 1 oder 2, dadurch gekennzeichnet, daß die Andrückplatte (10) mit einer Heizeinrichtung (14) versehen ist.

4. Vorrichtung nach einem der Ansprüche 1 bis 3, dadurch gekennzeichnet, daß dem Abnahmetisch (4), der vorzugsweise einen die Arbeitsfläche bildenden Bandförderer (16) aufweist, ein aus dem Endbereich der Arbeitsfläche (5) abwärts führender Abzugsförderer (17) od. dgl. mit einer Klemmeinrichtung (18) zum Erfassen der Unterfolie (2) nachgeordnet ist und sich der Werkzeugträger (9) zur Werkstückabnahme nach dem Aufsetzen auf den Arbeitstisch (4) parallel zur Arbeitsfläche (5) zum Arbeitsflächenende hin und darüber hinaus im Maße der Fördergeschwindigkeit von Abzugsförderer (17) und gegebenenfalls Bandförderer (16) bewegt.

5. Vorrichtung nach Anspruch 4, dadurch gekennzeichnet, daß der Abzugsförderer aus wenigstens zwei parallelgeführten Bandförderern zusammengesetzt ist, von denen jeder eine eigene Klemme aufweist.

## Claims

1. A device for removing a workpiece (1) in the form of a sheet from a sticky under-sheet (2), more particularly for separating the sheet and the waste from a blank cut out of a starting material comprising a sheet, the device comprising a removal table (4) receiving the starting material and a deposit table (6) or the like for receiving the removed workpiece (1), the tables preferably having negative-pressurisable working surfaces, the device also comprising a removal-tool holder (9) which is vertically movable and movable in reciprocation between the removal table (4) and the deposit table (6), characterised in that the tool holder (9) serves'as a removal tool and is equipped in known manner with a pressure plate (10) or the like covered with an adhesive sheet and matching the shape of the workpiece (1) to be removed, the adhesive sheet (11) being in the form of a belt and guided over two rollers (13) disposed on each side of the pressure plate (10) and offset to the rear thereof so that the adhesive sheet is longitudinally movable between two winding drums (12) and is preferably more adhesive than the under-sheet (2) relative to the workpiece (1), and the tool holder (9), after being placed on the workpiece (1) lying on the removal table (4) and when raising the workpiece (1) stuck to the adhesive sheet (11), removes the [workpiece] from the under-sheet (2) or the like, which is retained preferably by negative pressure on the working surface (5) of the removal table (4), and then for the purpose of setting down the workpiece after the pressure plate (10) and the workpiece (1) sticking to the sheet (11) have been placed on the deposit table (6) or the like, is movable parallel to the working surface (7) of the deposit table (6) in the longitudinal direction of the sheet accompanied by a diametrically opposite longitudinal movement of the adhesive sheet (11), and thus removes the adhesive sheet (11) from the workpiece (1), which is held preferably by a negative pressure on the working surface (7).

2. A device according to claim 1, characterised in that the tool holder (9) in the edge region of the pressure plate (10) can be equipped with known additional removal tools, more particularly needle grippers (15) or vacuum suckers.

3. A device according to claim 1 or 2, characterised in that the pressure plate (10) has a heating device (14).

4. A device according to any of claims 1 to 3, characterised in that the removal table (4), which preferably comprises a conveyor belt (16) constituting the working surface, is followed by a withdrawal conveyor (17) or the like which extends downwards from the end region of the working surface (5) and comprises a clamping device (18) for gripping the under-sheet (2), and the tool-holder (9), for the purpose of removing the workpiece after setting it on the work table (4), moves parallel to the working surface (5) towards the end thereof and beyond, corresponding to the conveying speed of the withdrawal conveyor (17) and optionally of the conveyor belt (16).

5. A device according to claim 4, characterised in that the withdrawal conveyor comprises at least two parallel-guided conveyor belts, each having a separate clamp.

## Revendications

1. Dispositif pour enlever une pièce d'usinage (1) bi-dimensionnelle d'une feuille (2) de support adhésive, en particulier pour séparer à partir d'un matériau de départ muni d'une feuille, un élément découpé de sa feuille et des chutes, qui comporte un plateau (4) de reprise qui reçoit le matériau de départ et un plateau (6) de dépose ou similaire qui reprend la pièce d'usinage (1) enlevée, étant entendu que lesdits plateaux présentent de préférence des plans de travail pouvant être placés sous l'action d'une dépression, ainsi qu'un porte-outil (9) qui peut être déplacé en va-et-vient entre le plateau (4) de reprise et le plateau (6) de dépose et porte un outil d'enlèvement,
caractérisé par le fait que le porte-outil (9) est équipé d'une manière connue en soi en tant qu'outil d'enlèvement d'une platine (10) de pression ou similaire dont la forme est adaptée à la pièce d'usinage (1) à enlever, qui est revêtue d'une feuille adhésive tendue, laquelle feuille (11) adhésive en forme de bande, guidée par l'intermédiaire de deux rouleaux (13) de renvoi placés des deux côtés de la platine (10) de pression en position en retrait par rapport à cette dernière, s'étend pour pouvoir être déplacée dans le sens de sa longueur entre deux tambours (12) d'enroulement et possède, de préférence, une affinité d'adhérence à l'égard de la pièce d'usinage (1) plus forte que la feuille (2) de support, et qu'après avoir été posé sur la pièce d'usinage (1) reposant sur le plateau (4) de reprise, le porte-outil (9) enlève, par son mouvement de relevage, la pièce d'usinage (1) collée à la feuille (11) adhésive de la feuille (2) de support ou similaire retenue, quant à elle, de préférence sur le plan (5) de travail du plateau (4) de reprise par l'action d'une dépression, peut, après la pose de la platine (10) de pression avec la pièce d'usinage (1) collant sur la feuille (11) adhésive sur le plateau (6) de dépose ou similaire, être déplacé dans le sens parallèle au plan (7) de travail du plateau (6) de dépose dans le sens de la longueur de la feuille, la feuille (11) adhésive se déplaçant dans le sens de sa longueur dans le sens contraire, et retire dans ces conditions la feuille (11) adhésive de la pièce d'usinage (1) retenue de préférence sur le plan (7) de travail par l'action d'une dépression.

2. Dispositif suivant la revendication 1,
caractérisé par le fait que le porte-outil (9) peut être équipé dans la zone du bord de la platine (10) de pression, d'outils d'enlèvement de complément connus en eux-mêmes, en particulier de preneurs (15) à pointes ou de ventouses de succion.

3. Dispositif suivant la revendication 1 ou 2,
caractérisé par le fait que la platine (10) de pression est munie d'un dispositif chauffant (14).

4. Dispositif suivant l'une des revendications 1 à 3,
caractérisé par le fait qu'à la suite du plateau (4) de reprise qui présente de préférence une bande transporteuse (16) constituant le plan de travail, est installé un transporteur (17) d'évacuation ou similaire qui conduit depuis la zone de l'extrémité du plan de travail vers le bas et est équipé d'une dispositif (18) à pincer pour saisir la feuille (2) de support, et que pour l'enlèvement de la pièce d'usinage, le porte-outil (9), après s'être posé sur le plateau (4) de reprise, se déplace parallèlement au plan (5) de travail en direction de l'extrémité dudit plan de travail et au-delà de la mesure de la vitesse de transport du transporteur (17) d'évacuation et, le cas échéant, de la bande transporteuse (16).

5. Dispositif suivant la revendication 4,
caractérisé par le fait que le transporteur d'évacuation est assemblé à partir d'au moins deux bandes transporteuses guidées parallèlement l'une par rapport à l'autre, dont chacune présente une pince en propre.
